# EUROPÄISCHE PATENTSCHRIFT

(11) **EP 0 977 011 B1**
(45) Veröffentlichungstag und Bekanntmachung des Hinweises auf die Patenterteilung: **12.03.2003**
(21) Anmeldenummer: 99109816.1
(22) Anmeldetag: 19.05.1999
(51) Int. Cl.: G01C 5/00

(54) **Elektronisches Nivellier und Verfahren zur optischen Anzielung**
Electronic leveller and method for optical alignment
Instrument électronique de mesure d'aplomb et méthode pour alignement optique

(30) Priorität: 29.07.1998 DE 19833996
(43) Veröffentlichungstag der Anmeldung: 02.02.2000
(73) Patentinhaber: ZSP Geodätische Systeme GmbH, 07745 Jena (DE)
(72) Erfinder: Kaschke, Michael, Dr. sc. nat., 73447 Oberkochen (DE); Monz, Ludwig-Heinz, Dr. rer. nat., 07743 Jena (DE); Feist, Wieland, Dr.-Ing., 07743 Jena (DE)
(74) Vertreter: Niestroy, Manfred

(56) Entgegenhaltungen:
- DE-A- 3 611 559
- DE-A- 3 916 385

## Beschreibung

Die Erfindung bezieht sich auf ein elektronisches Nivellier mit einem Neigungsmesser und ein Verfahren zur Videoanzielung einer Meßlatte mindestens eines vom Nivellier entfernten Zielpunktes nach dem Oberbegriff des ersten Patentanspruchs, wobei das Nivellier als Baunivellier bei niedrigen Herstellungskosten einen hohen Automatisierungsgrad besitzt.

Aus der DD 291 141 ist eine Anordnung zur Horizontierung der Ziellinie von Nivellieren bekannt, wobei die Anordnung ein Femrohr mit Zielachse, bestehend aus einem Objektiv mit Schiebelinse, einer Strichplatte und einem Okular. Die Anordnung enthält ferner eine Fotoempfängereinrichtung mit einem Differenzfotoelement und einen Piezosteller, durch den die Strichplatte in Abhängigkeit von den von einem Neigungsmesser gelieferten, durch einen Mikroprozessor entsprechend verarbeiteten Signalen so verstellt werden kann, daß eine Horizontierung der Fernrohrachse erreicht wird.

Die JP 60-25 413 beschreibt ein Nivellier mit einer digitalen Meßlatte im Zielpunkt. Dabei wird ein Lichtstrahl von einer im Nivellier angeordneten Lichtquelle über einen Strahlenteiler zu der Meßlatte gesendet und ein Bild der Meßlatte durch ein optisches Femsehkamerasystem aufgenommen und auf einem Bildschirm dargestellt. In einem Rechner werden die ermittelten Daten gespeichert und entsprechend ausgewertet. Der Bildschirm selbst stellt eine Flüssigkristallanzeige dar mit matrixartig angeordneten Elementen. Das Objektiv ist durch eine Schiebelinse manuell fokussierbar.

Es ist femer ein automatisches Nivellier aus der JP 5-272 970 bekannt, welches einen Matrixempfänger mit einem Bildschirm umfaßt, wobei Bildsignale von einer CCD-Kamera durch einen A/D-Wandler in entsprechende digitale Signale umgesetzt und in einem Datenspeicher gespeichert werden. Die CCD-Kamera besitzt ein fokussierbares Objektiv mit einer Schiebelinse.

Bei den angegebenen Anordnungen sind stets zur scharfen Abbildung der Lattenteilung auf eine Fotoempfänger- oder CCD-Anordnung fokussierbare Objektive vorgesehen.

Um die Fokussierung zu umgehen, ist eine Vorrichtung für Nivellierzwecke (DE 195 04 039 C1) geschaffen worden mit einer Abbildungsoptik und einem ortsauflösenden optoelektronischen Detektor zur Bildaufnahme. Dabei ist die Abbildungsoptik in unterschiedlich abbildende Pupillenzonen für unterschiedliche Schärfentiefenbereiche aufgeteilt, wobei den Pupillenzonen unterschiedliche Teilbereiche des Detektors zugeordnet sind. Diese Vorrichtung umgeht zwar eine Fokussierung, ist jedoch durch die verschiedenene Abbildungsoptiken relativ aufwendig.

Bei einem Verfahren zur geometrischen Höhenmessung nach der DE 39 16 385 wird analog den Signalen eines Neigungsmessers, der unabhängig von einem Fernrohr in einem Meßgerät angeordnet ist, der Bezugspunkt für die horizontale Lage des Meßgerätes auf dem Mittelpixel einer CCD-Zeile vorgesehen und bei geneigtem Gerät so verschoben, daß seine der jeweiligen Neigung des Gerätes entsprechende Lage den Durchstoßpunkt der horizontalen Zielachse für einen Pixel oder den Bereich zwischen zwei Pixeln bestimmt.

Der Erfindung liegt die Aufgabe zugrunde, ein elektronisches Nivellier und ein Verfahren zur Videoanzielung einer Meßlatte zu schaffen, welcher bei niedrigen Herstellungskosten unter Einsparung optischer und mechanischer Bauteile einen hohen Automatisierungsgrad der Messungen gewährleistet und bei dem große Stehachsenneigungen kompensierbar sind.

Erfindungsgemäß wird diese Aufgabe bei einem elektronischen Nivellier mit den im kennzeichnenden Teil des ersten Anspruchs dargelegten Mitteln gelöst. In den Unteransprüchen sind weitere Ausgestaltungen und Ausführungen des erfindungsgemäßen Nivelliers und zum Verfahren zur Videoanzielung offenbart.

Das erfindungsgemäße Nivellier stellt ein sogenanntes Kameranivellier dar, welches im Grunde nur noch aus dem Objektiv, dem Neigungsmesser, der Stehachse und einem unendlichen Seitenfeintrieb zur Anzielung der Meßlatte, aus einer Horizontiereinrichtung (Dreifuß oder Kugelkopfgelenk) und einem Bilderfassungs- und Bilddarstellungssystem besteht. Das Bilderfassungssystem umfaßt u. a. eine CCD-Empfängermatrix mit dem Mittelpixel, welches zusammen mit dem objektseitigen Hauptpunkt des Objektivs zur Festlegung der Ziellinie dient, der der Neigungsmesser fest zugeordnet ist, welche in bekannter Weise die Abweichung der Lage zur Horizontalen mißt. Die CCD-Empfängermatrix selbst wird im Videotakt betrieben und liefert somit bewegte Bilder des entfernten, zu vermessenden Ziels.

Um auch die Lage einer schief im Raum stehenden Stehachse bei den Messungen mit dem Nivellier zu berücksichtigen, werden die von dem Neigungsmesser gelieferten Daten durch den Rechner mitverarbeitet. Dadurch wird es möglich, das Nivellier nicht mehr genau horizontieren zu müssen. In einem solchen Fall würde das Lattenbild auf dem Bildschirm schief erscheinen. Das Nivellier ist deshalb nicht nur mit einer Bildauswerteelektronik und entsprechender Software sondern auch mit einem Rechner versehen, der mit Hilfe der Daten des Neigungsmessers eine entsprechende Höhenkorrektur berechnet und an die Lattenablesung anbringt. Mit Hilfe der Daten des in zwei Achsen Daten liefernden Neigungsmessers kann so ein auf dem Bildschirm vorhandenes Fadenkreuz lotrecht gestellt und in den Horizont geschoben werden, um gleichzeitig eine Ziellinienfluchtung wie mit einem gut horizontierten Nivellier vorzunehmen. So ist es möglich, mit einem windschief aufgestellten Nivellier wie mit einem gut horizontierten zu arbeiten.

Um Korrekturwerte besonders einfach zu erhalten und entsprechend zur Meßwertkorrektur verwenden zu können, ist es vorteilhaft, wenn der vordere, also der objektseitige Hauptpunkt des Objektivs im Schnittpunkt von Ziel- und Stehachse oder in einem festen Abstand von diesen Schnittpunkt liegt.

Es ist ferner von Vorteil, wenn zur Fokussierung des Lattenbildes die CCD-Empfängermatrix und das Objektiv relativ zueinander mittels Stellmittel in Richtung der optischen Achse des Objektivs verschiebbar sind, wobei die CCD-Empfängermatrix oder das Objektiv in einer festen Position zur Stehachse angeordnet sind, und wenn der Verschiebeweg und die Verschieberichtung der Matrix und/oder des Objektivs aus den von den Empfängerelementen der Matrix gelieferten Bilddaten durch ein an sich bekanntes Bildauswertesystem ermittelbar sind.

Weiterhin ist es vorteilhaft, daß die Anzeigeeinheit mit einem Bildschirm versehen ist, welcher eine Blende zur Ausblendung von Umgebungslicht besitzt und daß eine in Abhängigkeit vom Umgebungslicht den Kontrast des Bildschirmes steuernde Anordnung, welche mit dem Rechner verbunden ist, vorgesehen ist. Somit läßt sich auch bei ungünstigen Lichtverhältnissen der Bildschirm gut beobachten.

Ein Verfahren zur Videoanzielung mit dem erfindungsgemäß ausgebildeten Nivellier, wobei eine in einem entfernten Zielpunkt aufgestellte Meßlatte angezielt wird, ist dadurch gekennzeichnet, daß bei geneigt im Raum positionierter Stehachse des Nivelliers die Korrektur der Zielachse in Betrag und Richtung aus dem in der Meßrichtung des zweiachsigen Neigungsmessers gemessenen Winkel α der in Zielrichtung vorliegenden Neigungskomponente der Stehachse und die Bildaufrichtungskorrektur eines auf dem Bildschirm dargestellten Strichkreuzes aus einem in der anderen Meßrichtung des Neigungsmessers gemessenen Winkel β der quer zur Zielrichtung vorliegenden Neigungskomponente der Stehachse durch den Rechner bestimmt werden.

Um eine entsprechende Korrektur der Meßwerte vornehmen zu können, ist es vorteilhaft, wenn ein aus zwei Höhenkorrekturwerten bestehender Korrekturwert des Nivelliers aufgenommen wird,
wobei ein erster Höhenkorrekturwert Δh₁ = f × sin α ≈ f × arc α, um welchen der Mittelpixel auf der CCD-Empfängermatrix und dem Bildschirm zu verschieben ist, um die horizontale Ziellinie am Bild der Meßlatte auf dem Bildschirm zu markieren, und wobei ein zweiter Höhenkorrekturwert.
Δh₂ = s × sin α ≈ s × arc α, welcher den Abstand des objektseitigen Hauptpunktes des Objektivs zur, von der Horizontalen abweichenden Zielachse kompensiert,ermittelt werden,
wobei
- f: die Brennweite des Objektivs,
- s: der Abstand des objektseitigen Hauptpunktes des Objektivs vom Schnittpunkt von Steh- und Zielachse und
- α: der Neigungswinkel der Zielachse des Objektivs in Bezug auf die Horizontale in Zielrichtung bzw. der Neigungswinkel der Stehachse gegenüber der Lotrichtung in Zielrichtung sind,
und wenn mit Hilfe dieser beiden Höhenkorrekturwerte Δh₁ und Δh₂ durch den Rechner die Ablesung der Meßlatte korrigiert wird.

Um wie mit einem gut horizontierten Nivellier arbeiten zu können, wird zur Höhenkorrektur auf dem Bildschirm das Lattenbild oder das Bildfadenkreuz des Bildschirms in der Höhe verschoben.
Zur Bild- (Ziel-)aufrichtungskorrektur wird das Bild der Latte auf dem Bildschirm oder das Bildfadenkreuz des Bildschirms soweit gedreht, daß eine lotrechte Lage des Lattenbildes oder des Bildfadenkreuzes erreicht ist.

Die Erfindung soll nachstehend an einem Ausführungsbeispiel näher erläutert werden. In der Zeichnung zeigen
Fig. 1 vereinfacht den Aufbau des Nivelliers,
Fig. 2 eine vereinfachte Strahlenführung und
Fig. 3 eine Ansicht auf den Bildschirm.

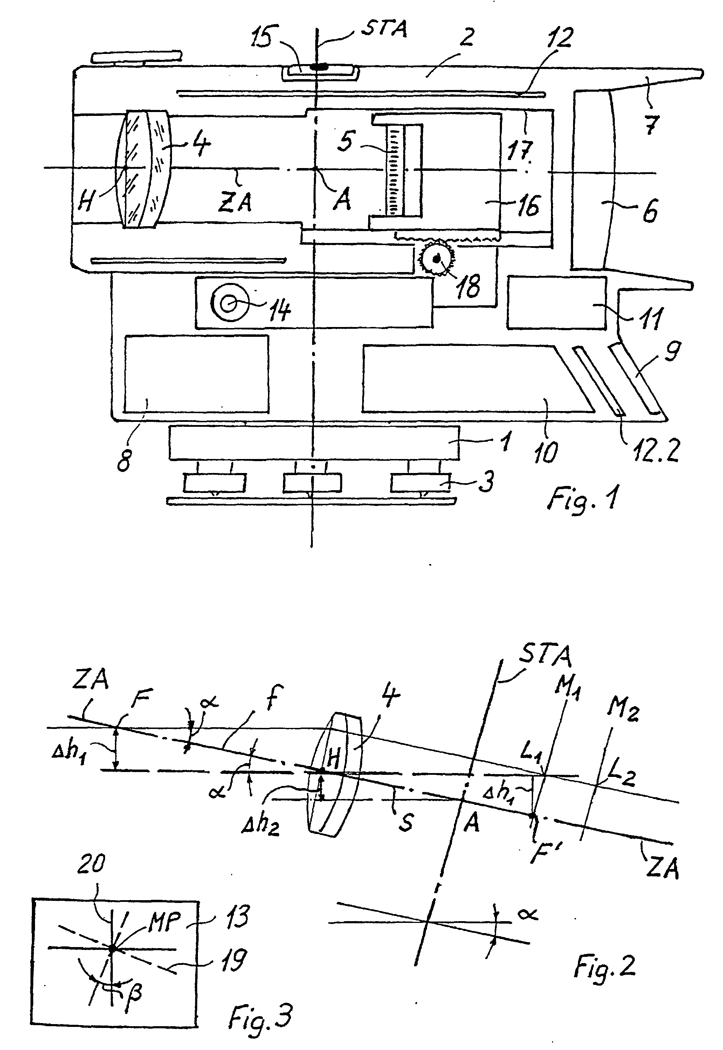

Das in Fig. 1 dargestellte elektronische Nivellier umfaßt einen festen Dreifuß 1, auf dem um ein eine Stehachse STA drehbares Oberteil 2 gelagert ist. Der Drehfuß 1 selbst kann ein an sich bekanntes Horizontierungsmittel mit Fußschrauben 3 oder mit Kugelkopf oder Keilscheiben darstellen, mit denen das Nivellier horizontiert werden kann. Die Stehachse STA ist in den Figuren als eine strichpunktierte Linie eingezeichnet. Das Oberteil 2 trägt sämtliche für die Funktion des Nivelliers notwendige Elemente bzw. Baugruppen. Im Oberteil 2 befinden sich ein Objektiv 4, dessen optische Achse mit der Zielachse ZA zusammenfällt, und eine aus CCD-Empfängern bestehende CCD-Empfängermatrix 5 als Bildaufnahmeeinrichtung und ein Bildschirm 6 mit Blende 7 zur Abschirmung gegen störendes Fremdlicht. Die Kombination aus Objektiv 4 und CCD-Empfängermatrix 5 stellt im Prinzip eine Videokamera dar, wobei die CCD-Empfängermatrix 5 vorzugsweise in Videotakt betrieben wird und somit bewegliche Bilder liefert. Das Objektiv 4 ist in einer festen Position zur Stehachse STA derart angeordnet, daß sein objektseitiger Hauptpunkt H mit dem Schnittpunkt A von Stehachse STA und Zielachse ZA zusammenfällt. Der Hauptpunkt H kann auch in einem festen Abstand s von diesem Schnittpunkt A angeordnet werden, wie es beispielsweise in Fig. 1 und 2 veranschaulicht ist. Die Abstand s wird dann bei der Bestimmung der Meßwerte als Gerätekonstante berücksichtigt, z. B. bei den Höhenkorrekturen, wie weiter unten noch ausgeführt wird.
Im oder am Oberteil 2 sind weiterhin eine Stromversorgungseinheit 8, eine Eingabeeinheit 9, z. B. eine Tastatur zur Eingabe von Daten, ein vorzugsweise mehrachsiger Neigungsmesser 10, ein Rechner 11 und entsprechende Elektronikbaugruppen 12 für eine Bildauswertung und zur Steuerung der einzelnen Funktionen, sowie Baugruppen und einen Monitor 13 zur Fokussierung des Objektivs 4 auf die CCD-Empfängermatrix 5, um ein scharfes Bild einer entfernt vom Nivellier aufgestellten Meßlatte (nicht dargestellt) zu bekommen, vorgesehen. Dieser Monitor 13 kann ebenfalls an der Rückseite des Nivelliers vorgesehen sein. Zur Feineinstellung des Objektivs 4 des Nivellierfernrohrs auf die das Ziel darstellende Meßlatte ist vorteilhaft ein unendlicher Trieb 14 vorgesehen. Nach einer Libelle 15, die im oberen Teil des Nivelliers angeordnet sein kann, kann eine Grobhorizontierung des Gerätes durch Verstellung der Fußschrauben 3 vorgenommen werden.

Zur Neigungsmessung bzw. Bestimmung und Berücksichtigung der Schieflage des Nivelliers ist ein zweiachsiger Neigungsmesser 10 vorgesehen, mit welchen sowohl die Neigungen in Richtung der Zielachse ZA als auch in einer dazu orthogonalen, in der Horizontalebene liegenden Richtung ermittelt und bei den weiteren Meßwertermittlungen einbezogen werden. Die beiden Meßrichtungen des Neigungsmessers 10 können jedoch miteinander auch einen anderen als einen rechten Winkel einschließen.

Um das Objektiv 4 auf die Ebene der CCD-Empfängermatrix 5 zu fokussieren, sind diese beiden Baugruppen relativ zueinander einstellbar. Hierzu ist, wie aus Fig. 1 zu entnehmen, ein die CCD-Empfängermatrix 5 tragender Tubus 16 in einer Führung 17 gelagert und durch einen Antrieb 18 in Richtung der Zielachse verschiebbar. Vorteilhaft kann die Fokussierung durch ein integriertes Bildauswertesystem automatisch vorgenommen werden. Dieses berechnet aus dem Bild der Meßlatte Daten und veranlaßt durch ein entsprechendes Signal, daß mit Hilfe des Antriebes 18 die Fokussierung durch ein Verstellen des gegenseitigen Abstandes von Objektiv 4 und der CCD-Empfängermatrix 5 durchgeführt wird. Hat das Bildauswertesystem das scharfe Bild erkannt, wird der Fokussiervorgang gestoppt; das Auslesen der Teilung der im Zielpunkt aufgestellten Meßlatte kann nun erfolgen.

Aus der in Fig. 2 dargestellten vereinfachten Strahlenführung des Nivelliers sind die Bedingungen zu entnehmen, die für eine richtige Funktion des Nivelliers zu erfüllen sind. Die Stehachse STA und damit auch das Objektiv 4 des Nivellierfemrohrs sind dabei zum Lattenhorizont um einen Winkel α geneigt dargestellt. Der den Horizont kennzeichnende Strahl durchläuft den objektseitigen Brennpunkt F des Objektivs 4 und trifft auf die objektseitige Hauptebene H des Objektivs 4. Dieser sogenannte Brennpunktstrahl wird durch das Objektiv 4 parallel zur Zielachse ZA in dem in der Ebene M₁ der CCD-Empfängermatrix 5 liegenden Bildpunkt L₁ abgebildet Bei einer Unendlichen Zielweite bildet die Bildebene M₁ die Ebene, in welcher der bildseitige Brennpunkt F' des Objektivs 4 liegt. Wird die Meßlatte dem Nivellier angenähert, so entfernt sich die Bildebene vom Objektiv 4. Beispielsweise ist in Fig. 2 der Ort der Bildebene M₂ mit dem Bildpunkt L₂ für die kürzest mögliche Zielentfernung (etwa 3 m) eingezeichnet. In dem Intervall zwischen M₁ und M₂ wird dann entsprechend durch das Fokussiersystem die CCD-Empfängermatrix 5 relativ zum Objektiv 4 oder umgekehrt bewegt und verstellt.

Gleichzeitig wird durch den Neigungsmesser der Winkel α bestimmt und ein erster Korrekturwert Δh₁ nach der Beziehung Δh₁ = f ×sin α ≈ f × arc α durch den Rechner 11 berechnet und der Mittelpixel MP, der sich bei Zielentfernung von Unendlich in F'befindet nach L₁ verschoben, wobei f die Brennweite des Objektivs 4 ist. Beim Fokussieren auf verschiedene Entfernungen zur Meßlatte bleibt der Abstand der Bildpunkte L₁ und L₂ von der Zielachse ZA erhalten.

Der Bezugspunkt für eine Höhenmessung mit dem Nivellier ist der Schnittpunkt A, welcher auf der Stehachse STA und der Zielachse ZA liegt. Deshalb muß an die Lattenablesung noch ein weiterer, den Abstand des Schnittpunktes A vom Horizont berücksichtigender zweiter Korrekturwert

Δh₂ = s × sin α ≈ s × arc α ermittelt werden, so daß die gesamte Höhenkorrektur dann Δh = Δh₁ + Δh₂ beträgt. Der Korrekturwert Δh₁ ist nur vom Neigungswinkel α und von der Brennweite f des Objektivs 4 abhängig und wird durch den Neigungsmesser 10 nicht nur im Betrag sondern auch in der Richtung ermittelt. So wird durch ein positives oder ein negatives Verzeichen angegeben, ob der Mittelpixel MP nach oben oder nach unten zu verschieben ist. Die Brennweite f ist eine feste Gerätekonstante, welche als konstanter Wert durch den Rechner bei den entsprechenden Berechnungen berücksichtigt wird.

Ebenso ist der Abstand s des Hauptpunktes H des Objektivs 4 von dem Schnittpunkt A eine Gerätekonstante, welche fest eingegeben werden kann und dann automatisch entsprechend berücksichtigt wird.

Anders sind die Verhältnisse jedoch dann, wenn zur Fokussierung das Objektiv 10 verschoben wird und die CCD-Empfängermatrix in einem festen Abstand zur Stehachse STA positioniert ist. In diesem Falle muß von der Videokamera nicht nur eine Autofokussierung durchgeführt werden, sondern es muß auch noch die Entfernung zur Meßlatte gemessen werden, um die momentane Bildweite für die Änderung von s (Abstand Objektiv 10 zur Stehachse STA) zu ermitteln.

Der Höhenkorrekturwert Δh₂ ist im allgemeinen klein, wenn das Nivellier gut vorhorizontiert und das Objektiv 4 nicht zu weit von der Stehachse STA entfernt angeordnet ist. Der Wert Δh₂ wird Null, wenn der Hauptpunkt H des Objektivs 4 mit dem Schnittpunkt A zusammenfällt.

Auf dem in Fig. 3 dargestellten Bildschirm des Monitors 13 ist die Lage des Mittelpixels MP bei gut horizontiertem Nivellier eingezeichnet. Steht dann das Nivellier windschief, so nimmt das Bild 19 der Meßlatte auf dem Bildschirm die gestrichelt eingezeichnete Lage ein, welche zur horizontalen Lage des Fadenkreuzes 20 um einen Quemeigungswinkel β gedreht ist. Dieser Winkel β wird ebenfalls durch den Neigungsmesser 10 ermittelt. Im Rechner 11 wird dann mittels einer Bildaufrichtungskorrektur das schiefe Bild 19 um den Winkel β in die horizontale Lage gedreht, so daß es mit dem Fadenkreuz 20 übereinstimmt.

## Patentansprüche

1. Elektronisches Nivellier, umfassend
--- einen Neigungsmesser,
--- eine, ein Fernrohr mit einem Objektiv und mit einer eine CCD-Empfängermatrix aufweisende Bildaufnahmeeinrichtung mit einem Bildschirm zur Darstellung des Bildes einer in einem Zielpunkt aufgestellten, mit einer codierten Teilung versehenen Meßlatte,
--- eine Stehachse, um die das Nivellier drehbar ist,
--- eine Horizontiereinrichtung zur Ausrichtung und Groborientierung des Nivelliers auf die Meßlatte
--- und eine Eingabeeinheit zur Eingabe von Meßdaten, eine Stromversorgungseinheit und ein Rechner zur Verarbeitung der Meßdaten, Berechnung von Meßwerten und zur Bildauswertung,
**dadurch gekennzeichnet,**
**daß** die Bildaufnahmeeinrichtung eine vorzugsweise im Videotakt betriebene CCD-Empfängermatrix (5) umfaßt, wobei das Objektiv (4) oder die CCD-Empfängermatrix (5) in einer festen Position zur Stehachse (STA) angeordnet sind und Objektiv (4) und CCD-Empfängermatrix (5) relativ zueinander einstellbar sind und der Neigungsmesser (10) zur Messung der Abweichung der Lage einer vom Objektiv (4) und einem Mittelpixel (MP) der CCD-Empfängermatrix (5) gebildeten Zielachse (ZA) zum Horizont fest zugeordnet ist.

2. Nivellier nach Anspruch 1, **dadurch gekennzeichnet,**
**daß** der Neigungsmesser (10) als zweiachsiger elektronischer Neigungsmesser vorgesehen ist, dessen Meßachsen senkrecht zueinander stehen und von denen eine Meßachse senkrecht zur Zielachse (ZA) oder in einem festen Winkel zu dieser steht und welcher mit den Rechner (11) verbunden ist.

3. Nivellier nach einem der vorgehenden Ansprüche, **dadurch gekennzeichnet,**
**daß** der vordere Hauptpunkt (H) des Objektivs (4) im Schnittpunkt (A) von Ziel- und Stehachse (ZA und STA) oder in einem festen Abstand s von diesem Schnittpunkt (A) liegt.

4. Nivellier nach einem der vorgehenden Ansprüche, **dadurch gekennzeichnet,**
--- **daß** zur Fokussierung des Bildes der Meßlatte die CCD-Empfängermatrix (5) und das Objektiv (4) relativ zueinander mittels Stellmittel oder eines Antriebs (18) in Richtung der optischen Achse des Objektivs (4) verschiebbar sind, wobei die CCD-Empfängermatrix (5) oder das Objektiv (4) in einer festen Position ***angeordnet sind***
--- und **daß** der Verschiebeweg und die Verschieberichtung der Matrix (5) und/oder des Objektivs (4) aus den von den Empfängerelementen der Matrix (5) gelieferten Bilddaten durch ein an sich bekanntes Bildauswertesystem ermittelbar sind.

5. Nivellier nach einem der vorgehenden Ansprüche, **dadurch gekennzeichnet,**
--- **daß** die Anzeigeeinheit mit einem Bildschirm (6) versehen ist, welcher eine Blende (7) zur Ausblendung von Umgebungslicht besitzt,
--- und **daß** eine in Abhängigkeit vom Umgebungslicht den Kontrast des Bildschirmes (6) steuernde Anordnung, welche mit dem Rechner (11) verbunden ist, vorgesehen ist.

6. Verfahren zur Videoanzielung mit einem nach Anspruch 1 ausgebildeten Nivellier,
wobei mit diesem Nivellier eine in einem entfernten Zielpunkt angeordnete Meßlatte angezielt wird,
**dadurch gekennzeichnet,**
**daß** bei geneigt im Raum positionierter Stehachse (STA) des Nivelliers
die Korrektur der Zielachse (ZA) in Betrag und Richtung aus dem in der Meßrichtung des zweiachsigen Neigungsmessers (10) gemessenen Winkel α der in Zielrichtung vorliegenden Neigungskomponente der Stehachse (STA)
und die Bildaufrichtungskorrektur eines auf dem Bildschirm (6) oder einem Monitor (13) dargestellten Strich- oder Fadenkreuzes (20) aus einem in der anderen Meßrichtung des Neigungsmessers (10) gemessenen Winkel β der quer zur Zielrichtung vorliegenden Neigungskomponente der Stehachse (STA) durch den Rechner (11) bestimmt werden.

7. Verfahren nach Anspruch 6, **dadurch gekennzeichnet,**
--- **daß** ein aus zwei Höhenkorrekturwerten bestehender Korrekturwert des Nivelliers aufgenommen wird,
wobei ein erster Höhenkorrekturwert Δh₁ = f × sin ***α ≈*** f × arc α, um welchen ***das Mittelpixel*** auf der CCD-Empfängermatrix und dem Bildschirm zu verschieben ist, um die horizontale Ziellinie am Bild der Meßlatte auf dem Bildschirm zu markieren,
und ein zweiter Höhenkorrekturwert Δh₂ = s × sin ***α ≈*** s × arc α, welcher den Abstand des objektseitigen Hauptpunktes (H) des Objektivs (4) zur, von der Horizontalen abweichenden Zielachse (ZA) kompensiert,
ermittelt werden,
wobei
f die Brennweite des Objektivs,
s der Abstand des objektseitigen Hauptpunktes des Objektivs vom Schnittpunkt von Steh- und Zielachse und
α der Neigungswinkel der Zielachse des Objektivs in Bezug auf die Horizontale in Zielrichtung bzw. der Neigungswinkel der Stehachse gegenüber der Lotrichtung in Zielrichtung sind,
--- und **daß** mit Hilfe dieser beiden Höhenkorrekturwerte Δh₁ und Δh₂ durch den Rechner (11) die Ablesung der Meßlatte korrigiert wird.

8. Verfahren nach einem der Ansprüche 6 und 7, **dadurch gekennzeichnet,**
**daß** zur Höhenkorrektur auf dem Bildschirm (13) das Bild der Meßlatte oder das Bildfadenkreuz (20) des Bildschirms in der Höhe verschoben werden
und **daß** zur Bild- oder Zielaufrichtungskorrektur das Bild (19) der Meßlatte auf dem Bildschirm (13) oder das Bildfadenkreuz (20) des Bildschirms (13) soweit gedreht werden, daß eine lotrechte Lage des Bildes der Meßlatte oder des Bildfadenkreuzes erreicht ist.

## Claims

1. Electronic level comprising
- a clinometer,
- an image recording device having a telescope with an objective and with a CCD receiver matrix and having a screen for displaying the image of a measuring staff set up at a target and provided with a coded graduation,
- a vertical axis about which the level is rotatable,
- a levelling device for alignment and rough orientation of the level with respect to the measuring staff,
- and an input unit for input of measurement data, a power supply unit and a computer for processing the measurement data, calculation of measurement values and for image evaluation,
**characterised in that** the image recording device comprises a CCD receiver matrix (5) which is preferably operated in video clock, wherein the objective (4) or the CCD receiver matrix (5) are disposed in a fixed position relative to the vertical axis (STA), the objective (4) and the CCD receiver matrix (5) are adjustable relative to one another and the clinometer (10) is assigned in a fixed manner for measurement of the deviation of the position of a sighting axis (ZA) formed by the objective (4) and a central pixel (MP) of the CCD receiver matrix (5) from the horizon.

2. Level as claimed in Claim 1, **characterised in that** the clinometer (10) is provided as a biaxial electronic clinometer, of which the measurement axes are perpendicular to one another, one of these measurement axes being perpendicular to the sighting axis (ZA) or at a fixed angle thereto, and which is connected to the computer (11).

3. Level as claimed in one of the preceding claims, **characterised in that** the front principal point (H) of the objective (4) lies in the intersection (A) of the sighting and vertical axes (ZA and STA) or at a fixed distance s from this intersection (A).

4. Level as claimed in one of the preceding claims, **characterised in that**
- for focusing of the image of the measuring staff the CCD receiver matrix (5) and the objective (4) are displaceable relative to one another by means of adjusting means or a drive (18) in the direction of the optical axis of the objective (4), the CCD receiver matrix (5) or the objective (4) being disposed in a fixed position,
- and that the displacement path and the displacement direction of the matrix (5) and/or of the objective (4) can be determined from the image data supplied by the receiver elements of the matrix (5) by an image evaluating system which is known *per se.*

5. Level as claimed in one-of the preceding claims, **characterised in that**
- the display unit is provided with a screen (6) which has a diaphragm (7) for screening out ambient light,
- and that an arrangement is provided which controls the contrast of the screen (6) as a function of the ambient light and is connected to the computer (11).

6. Method of video sighting using a level constructed as claimed in Claim 1, wherein a measuring staff disposed at a distant target is sighted with this level, **characterised in that**, with the vertical axis (STA) of the level positioned so that it is inclined in space, the correction of the sighting axis (ZA) is determined in amount and direction by the computer (11) from the angle α of the inclination component of the vertical axis (STA) in the sighting direction which is measured in the measuring direction of the biaxial clinometer (10), and the image erection correction of a cross-wire or cross-hair (20) displayed on the screen (6) or on a monitor (13) is determined by the computer (11) from an angle β of the inclination component of the vertical axis (STA) transverse to the sighting direction which is measured in the other measuring direction of the clinometer (10).

7. Method as claimed in Claim 6, **characterised in that**
- a correction value of the level which consists of two height correction values is recorded, wherein a first height correction value Δh₁ = f x sin α ? f x arc α is determined, by which the central pixel on the CCD receiver matrix and on the screen is to be displaced in order to mark the horizontal line of sight on the image of the measuring staff on the screen, and a second height correction value Δh₂ = s x sin α ? s x arc α is determined, which compensates for the distance of the object-side principal point (H) of the objective (4) from the sighting axis (ZA) which diverges from the horizontal,
where f is the focal length of the objective,
s is the distance of the object-side principal point of the objective from the intersection of the vertical axis and the sighting axis, and
a is the angle of inclination of the sighting axis of the objective relative to the horizontal in the sighting direction or the angle of inclination of the vertical axis relative to the normal direction in the sighting direction,
and that the reading of the measuring staff is corrected by the computer (11) with the aid of these two height correction values Δh₁ and Δh₂.

8. Method as claimed in one of Claims 6 and 7, **characterised in that** the image of the measuring staff or the image cross-hair (20) of the screen is displaced in height for height correction on the screen (13), and that for image or target erection correction the image (19) of the measuring staff on the screen (13) of the image cross-hair (20) of the screen (13) is rotated until a vertical position of the image of the measuring staff or of the image cross-hair is achieved.

## Revendications

1. Niveau électronique comprenant
- un clinomètre,
- un dispositif de prise de vues comportant un télescope avec un objectif et une matrice de réception CCD, avec un écran pour représenter l'image d'une mire graduée installée dans un point de visée et pourvue d'une graduation codée,
- un axe vertical autour duquel le niveau peut tourner,
- un dispositif d'ajustement d'horizon pour diriger et orienter grossièrement le niveau sur la mire graduée, et
- une unité de saisie pour saisir des données de mesure, une unité d'alimentation électrique et un ordinateur pour le traitement des données de mesure, le calcul des valeurs de mesure et pour l'interprétation des images,
**caractérisé en ce que** le dispositif de prise de vues comprend une matrice de réception CCD (5) fonctionnant de préférence au rythme vidéo, l'objectif (4) ou la matrice de réception CCD (5) étant disposé dans une position fixe par rapport à l'axe vertical (STA), et l'objectif (4) ainsi que la matrice de réception CCD (5) étant réglable l'un par rapport à l'autre, et le clinomètre (10) pour la mesure de l'écart de la position d'un axe de visée (ZA), formé par l'objectif (4) et un pixel central (MP) de la matrice de réception CCD (5), étant associé fixement par rapport à l'horizon.

2. Niveau selon la revendication 1, **caractérisé en ce que** le clinomètre (10) est prévu en tant que clinomètre électronique à deux axes dont les axes de mesure sont perpendiculaires l'un à l'autre et dont un axe de mesure est perpendiculaire à l'axe de visée (ZA) ou est disposé suivant un angle fixe par rapport à celui-ci, lequel clinomètre est relié à l'ordinateur (11).

3. Niveau selon l'une des revendications précédentes, **caractérisé en ce que** le point principal avant (H) de l'objectif (4) se situe au point d'intersection (A) de l'axe de visée et de l'axe vertical (ZA et STA) ou à une distance (s) fixe de ce point d'intersection (A).

4. Niveau selon l'une des revendications précédentes, **caractérisé en ce que** pour la focalisation de l'image de la mire graduée, la matrice de réception CCD (5) et l'objectif (4) peuvent coulisser l'un par rapport à l'autre par des moyens de réglage ou un dispositif d'entraînement (18), en direction de l'axe optique de l'objectif (4), la matrice de réception CCD (5) ou l'objectif (4) étant disposé dans une position fixe, et **en ce que** la distance et le sens de coulissement de la matrice (5) et/ou de l'objectif (4) peuvent être déterminés à partir des données d'image fournies par les éléments de réception de la matrice (5), par un système connu d'interprétation d'image.

5. Niveau selon l'une des revendications précédentes, **caractérisé en ce que** l'unité d'affichage est dotée d'un écran (6) qui possède un diaphragme (7) pour éliminer la lumière ambiante, et **en ce qu'**est prévu un dispositif qui est relié à l'ordinateur (11) et qui commande le contraste de l'écran (6), en fonction de la lumière ambiante.

6. Procédé de visée vidéo avec un niveau conformé selon la revendication 1, une mire graduée disposée dans un point de visée éloigné étant visée avec ce niveau, **caractérisé en ce que**, dans le cas où l'axe vertical (STA) du niveau, est positionné incliné dans l'espace, la correction de l'axe de visée (ZA) est déterminée en valeur absolue et direction à partir de l'angle (α) mesuré dans le sens de mesure de l'inclinomètre (10) à deux axes, de la composante d'inclinaison, existant dans la direction de visée, de l'axe vertical STA, et la correction de redressement de l'image d'une croisée de traits ou de fils (20), représentée sur l'écran (6) ou un moniteur (13), est déterminée par l'ordinateur (11) à partir d'un angle (β) mesuré dans l'autre sens de mesure de l'inclinomètre (10), de la composante d'inclinaison, existant transversalement à la direction de visée, de l'axe vertical (STA).

7. Procédé selon la revendication 6, **caractérisé en ce qu'**on enregistre une valeur de correction du niveau, constituée de deux valeurs de correction de la hauteur, une première valeur de correction de la hauteur Δh₁ = f x sin α ≈ f x arc α, de laquelle le pixel central doit être déplacé sur la matrice de réception CCD et l'écran, pour marquer la ligne de visée horizontale sur l'image de la mire graduée sur l'écran, et une deuxième valeur de correction de la hauteur Δh₂ = s x sin α ≈ s arc α, qui compense la distance du point principal (H) côté objet de l'objectif (4) par rapport à l'axe de visée (ZA) s'écartant de l'horizontale, étant déterminées, f étant la distance focale de l'objectif,
s la distance du point principal côté objet de l'objectif par rapport au point d'intersection de l'axe vertical et de l'axe de visée, et
α étant l'angle d'inclinaison de l'axe de visée de l'objectif par rapport à l'horizontale dans la direction de visée, ou l'angle d'inclinaison de l'axe vertical par rapport à la verticale dans la direction de visée,
et **en ce qu'**à l'aide de ces deux valeurs de correction de la hauteur Δh₁ et Δh₂, l'ordinateur (11) corrige la lecture de la mire graduée.

8. Procédé selon l'une des revendications 6 et 7, **caractérisé en ce que** pour la correction de la hauteur sur l'écran (13), l'image de la mire graduée ou la croisée de fils (20) de l'image de l'écran est déplacée en hauteur, et **en ce que** pour la correction du redressement de l'image ou de la mire, l'image (19) de la mire graduée sur l'écran (13) ou la croisée de fils (20) de l'image de l'écran (13) est tournée jusqu'à ce que l'on atteigne une position verticale de l'image de la mire graduée ou de la croisée de fils de l'image.
